(19) Europäisches Patentamt
European Patent Office
Office européen des brevets

(11) **EP 2 179 968 B1**

(12) **FASCICULE DE BREVET EUROPEEN**

(45) Date de publication et mention
de la délivrance du brevet:
**21.09.2016 Bulletin 2016/38**

(51) Int Cl.:
*C01G 53/00* (2006.01)    *H01M 4/48* (2006.01)
*H01M 4/50* (2006.01)    *H01M 4/52* (2006.01)
*H01M 4/485* (2010.01)    *H01M 4/505* (2010.01)
*H01M 4/525* (2010.01)    *H01M 10/0525* (2010.01)

(21) Numéro de dépôt: **09172135.7**

(22) Date de dépôt: **02.10.2009**

(54) **MATERIAU D'ELECTRODE POSITIVE POUR ACCUMULATEUR LITHIUM-ION**

POSITIVES KOMPOSITELEKTRODENMATERIAL FÜR EINE LITHIUMIONEN-SEKUNDÄRBATTERIE

COMPOSITE POSITIVE ACTIVE MATERIAL FOR LITHIUM-ION BATTERY

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **24.10.2008 FR 0805938**

(43) Date de publication de la demande:
**28.04.2010 Bulletin 2010/17**

(73) Titulaires:
• **Saft Groupe S.A.**
**93170 Bagnolet (FR)**
• **Centre National de la Recherche Scientifique**
**75016 Paris (FR)**
• **Umicore**
**1000 Bruxelles (BE)**

(72) Inventeurs:
• **Bains, Jessica**
**28210 Coulombs (FR)**
• **Croguennec, Laurence**
**33650 Saint Selve (FR)**
• **Delmas, Claude**
**33600 Pessac (FR)**
• **Levasseur, Stéphane**
**1060 Bruxelles (BE)**
• **Breger, Julien**
**33000 Bordeaux (FR)**
• **Castaing, Frédéric**
**33170 Gradigan (FR)**
• **Biensan, Philippe**
**33360 Carignan de Bordeaux (FR)**

(74) Mandataire: **Hirsch & Associés**
**137, rue de l'Université**
**75007 Paris (FR)**

(56) Documents cités:
**EP-A- 1 523 052    JP-A- 2005 089 225**
**JP-A- 2005 150 102    US-A1- 2005 014 065**

• **SHANGYUN YE ET AL: "Al, B, and F doped LiNi1/3Co1/3Mn1/3O2 as cathode material of lithium-ion batteries" JOURNAL OF SOLID STATE ELECTROCHEMISTRY ; CURRENT RESEARCH AND DEVELOPMENT IN SCIENCE AND TECHNOLOGY, SPRINGER, BERLIN, DE, vol. 11, no. 6, 21 novembre 2006 (2006-11-21), pages 805-810, XP019493553 ISSN: 1433-0768**
• **S.-K. HU ET AL.: "Effect of Co content on performance of a LiAl1/3-xCoxNi1/3Mn1/3O2 compounds for lithium-ion batteries" JOURNAL OF POWER SOURCES, vol. 160, 2006, pages 1287-1293, XP002525296**

**Description**

DOMAINE DE L'INVENTION

Le domaine technique de l'invention est celui des matériaux électrochimiquement actifs utilisés dans la fabrication des électrodes positives (ou cathodes) des générateurs électrochimiques rechargeables (ou accumulateurs) au lithium.

ART ANTERIEUR

Les oxydes lithiés de métaux de transition sont connus comme matière active cathodique utilisable dans les générateurs rechargeables au lithium. Dans l'électrode positive, on utilise généralement comme matière électrochimiquement active des oxydes lithiés de métaux de transition de formule générale $LiMO_2$ où M est le plus souvent Mn, Ni ou Co. et leurs dérivés substitués. On peut par exemple citer comme matière active cathodique, le composé $Li(Ni_{0,8}Co_{0,15}Al_{0,05})O_2$, qui est un oxyde lithié de nickel-cobalt-aluminium. Ce matériau, encore appelé NCA (Nickel-Cobalt-Aluminium), est présent dans l'électrode positive de générateurs rechargeables au lithium utilisés pour les applications industrielles, telles que les véhicules hybrides électriques et les applications spatiales.

Ce type de matière active ne présente cependant pas une stabilité thermique suffisante. En effet, en cas de surcharge ou de mise en court-circuit accidentelle du générateur, il se produit une élévation importante et soudaine de la température due à une réaction exothermique de la matière active avec l'électrolyte. Etant donné que la plupart des matériaux ont une structure très instable, la surchauffe entraîne la dégradation de ces matières actives. L'instabilité thermique insuffisante de ces matériaux d'électrode positive pose un problème de sécurité lorsqu'ils sont utilisés dans de petits générateurs destinés à fournir de forts courants (éléments de puissance).

De nombreux travaux se sont attachés à améliorer les caractéristiques de la matière active cathodique $LiNiO_2$ qui possède une forte instabilité thermique. Parmi les solutions envisagées pour stabiliser la structure de $LiNiO_2$ lors de l'insertion/désinsertion du lithium, la substitution d'une partie du nickel par d'autres éléments moins réactifs, tels que le manganèse et l'aluminium, a été fréquemment retenue.

Le document FR-A-2 860 922 décrit une matière électrochimiquement active résultant de la substitution d'une partie du nickel d'un oxyde mixte monophasé de nickel et de lithium du type $LiNiO_2$ par des éléments tels que Al, B, Ga, Mg, Zn, Fe, Cu, Ti, Zr, V, Ga et Si. Il est dit que cette matière présente une stabilité thermique améliorée. Cependant, la capacité électrochimique des matériaux décrits dans ce document est insuffisante. On recherche donc une matière électrochimiquement active présentant une capacité électrochimique plus élevée que celle des matériaux décrits dans FR-A-2 860 922 tout en conservant une stabilité thermique élevée.

Le document US 2005/0014065 décrit une matière active cathodique pour accumulateur de type lithium ion de formule générale $Li_xNi_yCo_zMn_{1-y-z-q}X_qO_2$ avec $x \geq 1,05$ ; $0 < y < 0,35$ ; $0 < z < 0,35$ ; X est choisi parmi Al, Mg, Sr, Ti et La, et $0 \leq q < 0,1$. Il est dit que cette matière active permet de fabriquer un accumulateur présentant une capacité élevée et une bonne durée de vie en cyclage lorsqu'il est soumis à une charge à tension élevée.

Le document JP 2005-150102 décrit une matière active cathodique pour accumulateur de type lithium ion de formule générale $Li_aMn_xNi_yX_zO_2$ avec X=Co et/ou Al avec $1 \leq a \leq 1,2$ $0 \leq x \leq 0,65$ ; $0,35 \leq y \leq 1$ ; $0 \leq z \leq 0,65$ et x+y+z=1. Il est dit que cette matière active présente une granulométrie particulière qui permet une bonne capacité et qui peut être facilement étalée pour former un revêtement sur un collecteur de courant.

RESUME DE L'INVENTION

L'invention a pour objet un composé de formule $Li_{1+x}(Ni_aMn_bCo_cAl_y)_{1-x}O_2$ dans lequel :

a, b et c sont non nuls;

$$a+b+c+y=1 \ ;$$

$$1,05 \leq (1+x)/(1-x) \leq 1,25 \ ;$$

$$0,015 \leq y(1-x) \ ;$$

la quantité atomique de manganèse représentant de 95% à 100% de la quantité atomique de nickel. Ce composé est utilisé comme matière active d'électrode.

Selon un mode de réalisation, la quantité de manganèse représente de 97% à 100% de la quantité de nickel, de préférence de 98% à 100% de la quantité de nickel, de préférence encore de 99% à 100% de la quantité de nickel.

Selon un mode de réalisation, $0{,}02 \leq y(1-x)$.

Selon un mode de réalisation, $0{,}04 \leq y(1-x)$.

Selon un mode de réalisation, $0{,}09 \leq y(1-x)$.

Selon un mode de réalisation, $1{,}05 \leq (1+x)/(1-x) \leq 1{,}15$.

Selon un mode de réalisation, $1{,}05 \leq (1+x)/(1-x) \leq 1{,}10$.

Selon un mode de réalisation, $a=b=0{,}5-z$ ; $c=2z-y$ ; et $0 < z \leq 0{,}15$.

Selon un mode de réalisation, $0 < z \leq 0{,}10$.

Selon un mode de réalisation, $0 < z \leq 0{,}075$.

Selon un mode de réalisation, le composé ne contient pas d'ions $Mn^{3+}$.

L'invention a également pour objet une électrode comprenant le composé selon l'invention. Selon un mode de réalisation, l'électrode est une électrode positive pour accumulateur au lithium.

L'invention a également pour objet un accumulateur au lithium comprenant au moins une électrode positive comprenant ce composé.

Le composé objet de l'invention, possède une capacité électrochimique plus élevée que celle des matériaux de l'art antérieur tout en conservant une bonne stabilité thermique. Ce matériau présente de bonnes performances électrochimiques en puissance à 30°C et à -20°C.

BREVE DESCRIPTION DES FIGURES

La Figure 1 représente les résultats des essais de mesure DSC des composés des Exemples 8, 9, 10 et 11 décrits dans le Tableau 1. Dans les exemples 8, 9 et 10, $a=b=0{,}425$. Les essais sont effectués sur des électrodes non lavées, après un cycle entre 2 et 4,5V et une charge à C/20 (cellule en inox à visser Swagelok, 88% matière active, 10% carbone, 2% PTFE).

La Figure 2 représente les résultats des essais de mesure DSC des composés des Exemples 1, 3, 4 et 11 décrits dans le Tableau 1. Dans les exemples 1, 3 et 4, $a=b=0{,}40$. Les essais sont effectués sur des électrodes non lavées, après un cycle entre 2 et 4,5V et une charge à C/20 (cellule en inox à visser Swagelok, 88% matière active, 10% carbone, 2% PTFE).

La Figure 3 représente la mesure de l'aimantation en fonction du champ magnétique à 5 K, associée aux résultats obtenus par affinement par la méthode de Rietveld des données de diffraction des rayons X (DRX) pour l'Exemple 7.

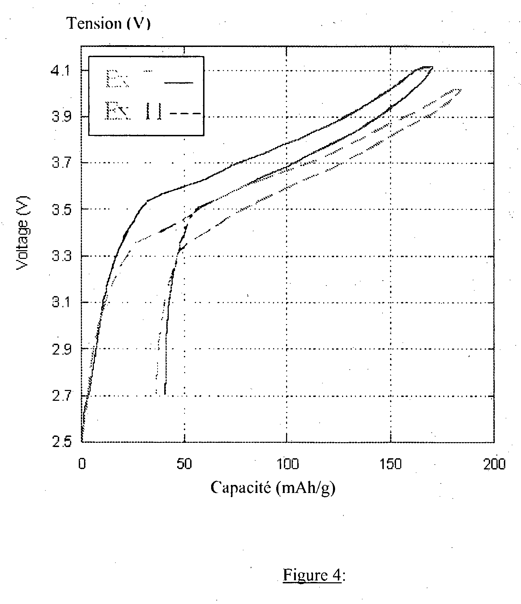

La Figure 4 représente la courbe de charge-décharge des électrodes comprenant les composés des exemples 7 et 11. On déduit de ces courbes les valeurs de la capacité électrochimique totale obtenues lors de la formation à 60°C à un régime de décharge de C/10 pour des accumulateurs de format 4/5A.

La Figure 5 représente les courbes de mesure de puissances obtenues lors des tests de puissance (Peak Power Tests PPT) sur des accumulateurs de format 4/5A comprenant une électrode positive comprenant les composés des Exemples 7 et 11.

a) Décharge à 30°C, pic (« pulse ») de courant au régime de 20C pendant 18s,
b) Charge à 30°C, pic (« pulse ») de courant au régime de 9C pendant 10s,
c) Décharge à -20°C, pic (« pulse ») de courant au régime de 9C pendant 2s.

EXPOSE DETAILLE DES MODES DE REALISATION.

L'invention concerne un matériau lamellaire d'électrode positive. Un matériau lamellaire présente une structure quasi bidimensionnelle avec une alternance de feuillets $BO_2$ (de caractère plutôt covalent) et d'espaces interfeuillets $AO_2$ (de caractère plutôt ionique), avec majoritairement des métaux de transition dans les feuillets et des ions lithium dans les espaces interfeuillets. La diffusion ionique se fait principalement au sein des espaces interfeuillets. Le matériau de type $Li_{1+x}M_{1-x}O_2$, présentant les caractéristiques suivantes:

a) M représente une composition quaternaire dans laquelle chacun des éléments Ni, Mn, Co, et Al est présent ;
b) une surlithiation, c'est-à-dire que le composé présente un nombre de moles de lithium en excès par rapport à la somme du nombre de moles de nickel, cobalt, aluminium et manganèse. Le matériau est surlithié dans un domaine précis : le rapport atomique Li/M est compris entre 1,05 et 1,25, c'est-à-dire que $1,05 \leq (1+x)/(1-x) \leq 1,25$ Dans un mode de réalisation, le rapport Li/M est inférieur ou égal à 1,15. Dans un mode de réalisation, le rapport Li/M est inférieur ou égal à 1,10.

c) L'indice stoechiométrique de l'aluminium est supérieur ou égal à 0,015, de préférence supérieur ou égal à 0,02, de préférence supérieur ou égal à 0,04, de préférence encore supérieur ou égal à 0,09.

d) la quantité atomique de manganèse représente de 95% à 100% de la quantité atomique de nickel, de préférence elle représente de 97% à 100% de la quantité atomique de nickel, de préférence encore de 98% à 100% de la quantité atomique de nickel.

L'invention a en particulier pour objet un composé de formule générale suivante :

$$Li_{1+x}(Ni_{1/2-z}Mn_{1/2-z}Co_{2z-y}Al_y)_{1-x}O_2$$

où x, y et z satisfont les relations suivantes:

$$1,05 \leq (1+x)/(1-x) \leq 1,25 \text{ ; soit } 1/41 \leq x \leq 1/9 \text{ ;}$$

$$0 < z \leq 0,15 \text{ ;}$$

et

$$0,015 \leq y(1-x).$$

Ce composé est donc caractérisé par :

a) la présence des éléments Ni, Mn, Co et Al ;
b) une surlithiation par rapport à la quantité totale des éléments Ni, Mn, Co et Al.
c) une égalité des indices stoechiométriques du nickel et du manganèse ;
d) un indice stoechiométrique de l'aluminium supérieur ou égal à 0,015.

Sans vouloir être liée par la théorie, la Demanderesse pense que :

- la présence de manganèse et d'aluminium confère au matériau une meilleure stabilité thermique par rapport à un composé comprenant seulement les éléments nickel-cobalt-aluminium (NCA). La présence de manganèse et d'aluminium permet d'augmenter la température à laquelle un emballement thermique se produit. Le matériau est donc plus sûr.
- la quantité atomique de manganèse représentant de 95% à 100% de la quantité atomique de nickel permet de n'avoir que des ions $Mn^{4+}$ et ainsi d'éviter la présence d'ions $Mn^{3+}$. La présence d'ions $Mn^{3+}$ est néfaste car elle peut provoquer une éventuelle dissolution de manganèse dans l'électrolyte. De préférence, la concentration en ions $Mn^{3+}$ est inférieure à 4000 ppm.

La concentration en ions $Mn^{3+}$ peut être déterminée par une combinaison analyse chimique (détermination de la concentration totale en manganèse dans l'échantillon) et dosage oxydo-réduction (détermination du degré moyen d'oxydation du manganèse). L'analyse élémentaire des éléments Ni, Mn, Co, Al et Li dans le composé obtenu peut se faire par spectrométrie d'émission optique au plasma (ICP-OES).

Le dépôt de manganèse sur l'électrode négative est donc ainsi minimisé. Cela permet aussi de maximiser la présence de $Ni^{2+}$ possédant un double caractère redox ($Ni^{2+}$ - $Ni^{3+}$ - $Ni^{4+}$) afin de réduire la diminution de capacité électrochimique causée par la réduction de la quantité des ions électrochimiquement actifs (nickel et cobalt) en raison de leur substitution partielle. - la surlithiation du composé dans un domaine précis correspondant à un coefficient de surlithiation allant de 1,05 à 1,25, permet l'obtention d'une phase homogène et sans impuretés. Ceci induit une diminution du taux de nickel dans les espaces interfeuillets de lithium, donc une bonne diffusivité des ions $Li^+$ et, par conséquent, de bonnes performances en terme de puissance.

Le composé selon l'invention peut être fabriqué en suivant les étapes suivantes :

- Préparation d'une solution aqueuse de nitrates des métaux de transition : Ni, Co, Mn et Al, dans les proportions souhaitées ;
- Précipitation de la solution par addition de LiOH.H$_2$O et/ou de NH$_4$OH. On obtient alors un précipité d'hydroxyde des métaux de transition.
- Evaporation et/ou filtration du précipité obtenu et séchage dans une étuve (entre 105 et 180°C) ;
- Broyage et ajout éventuel de lithine ;
- Pré-calcination entre 480 et 500°C ;
- Calcination entre 900 et 1000°C ;
- Broyage final.

L'analyse élémentaire des éléments Ni, Mn, Co, Al et Li dans le composé obtenu peut se faire par spectrométrie d'émission optique au plasma (ICP-OES).

Le composé ainsi synthétisé peut être utilisé comme matière électrochimiquement active d'une électrode positive d'un accumulateur au lithium. Cet accumulateur peut être de type lithium-ion ou de type lithium polymère. Les applications utilisant ce type d'accumulateur sont les appareils électriques électroniques portables, les véhicules électriques, les véhicules hybrides, les applications spatiales, la télécommunication, les équipements de secours.

EXEMPLES

Plusieurs composés ont été réalisés selon le mode de synthèse décrit précédemment. Les composés synthétisés sont indiqués dans le Tableau 1 ci-dessous.

Tableau 1: Composés testés

| N° exemple | a | b | c | y | x | z | Ni$_{a(1-x)}$ | Mn$_{b(1-x)}$ | Co$_{c(1-x)}$ | Al$_{y(1-x)}$ | Li$_{(1+x)}$ | Li/M $(1+x)/(1-x)$ |
|---|---|---|---|---|---|---|---|---|---|---|---|---|
| 1 Comparatif | 0,40 | 0,40 | 0,20 | 0,00 | 0,038 | 0,1 | 0,385 | 0,3848 | 0,192 | - | 1,038 | 1,08 |
| 2 | 0,40 | 0,40 | 0,18 | 0,02 | 0,038 | 0,1 | 0,385 | 0,385 | 0,173 | 0,019 | 1,038 | 1,08 |
| 3 | 0,40 | 0,40 | 0,15 | 0,05 | 0,038 | 0,1 | 0,385 | 0,385 | 0,144 | 0,048 | 1,038 | 1,08 |
| 4 | 0,40 | 0,40 | 0,10 | 0,10 | 0,038 | 0,1 | 0,385 | 0,385 | 0,096 | 0,096 | 1,038 | 1,08 |
| 5 Comparatif | 0,425 | 0,425 | 0,10 | 0,05 | 0,099 | 0,075 | 0,421 | 0,421 | 0,099 | 0,096 | 1,099 | 1,02 |
| 6 | 0,40 | 0,40 | 0,10 | 0,10 | 0,061 | 0,1 | 0,376 | 0,376 | 0,094 | 0,096 | 1,061 | 1,13 |
| 7 | 0,40 | 0,40 | 0,15 | 0,05 | 0,107 | 0,1 | 0,357 | 0,357 | 0,134 | 0,048 | 1,107 | 1,24 |
| 8 Comparatif | 0,425 | 0,425 | 0,15 | 0,00 | 0,024 | 0,075 | 0,415 | 0,415 | 0,146 | - | 1,024 | 1,05 |
| 9 | 0,425 | 0,425 | 0,10 | 0,05 | 0,024 | 0,075 | 0,415 | 0,415 | 0,098 | 0,048 | 1,024 | 1,05 |
| 10 | 0,425 | 0,425 | 0,05 | 0,10 | 0,024 | 0,075 | 0,415 | 0,415 | 0,049 | 0,096 | 1,024 | 1,05 |
| 11 Comparatif | 0,80 | 0,00 | 0,15 | 0,05 | - | - |  |  |  | 0,048 | - | - |

L'amélioration de la stabilité thermique des composés selon l'invention a pu être mise en évidence grâce à la technique de la calorimétrie différentielle à balayage (« DSC : Differential Scanning Calorimetry »). Cette technique permet de détecteur les effets endothermiques et exothermiques qui se produisent lors de changements d'état d'un matériau ou d'une réaction chimique. Elle est utilisée dans l'invention pour mesurer la température à laquelle la matière active cathodique subit une décomposition. Lorsque la matière active cathodique est chauffée, sa structure évolue et les transformations se réalisent avec échange de chaleur. Dans le cas présent, on observe une réaction exothermique entre l'oxygène dégagé par le matériau positif et l'électrolyte. On enregistre le flux de chaleur dégagé pendant la décomposition du matériau cathodique lorsqu'on applique à celui-ci une élévation de température. L'analyse « DSC » renseigne sur la température de transformation (pic endothermique ou exothermique) et sur l'énergie thermique requise pour la transformation (aire du pic).

Les mesures DSC ont été réalisées sur les électrodes positives non lavées incorporant chacune un des composés décrits dans le Tableau 1. Les électrodes positives sont constituées de la matière active positive, des conducteurs électroniques (carbone, suie..) et du liant (polyfluorure de vinylidène (PVDF), polytétrafluororéthylène (PTFE)...). Elles ont subi au préalable un cycle (charge + décharge) et une charge. Les conditions de cyclage étant les suivantes : Limites du cyclage en tension 2-4,5V, décharge au courant de C/20 à température ambiante. Les résultats des mesures DSC sont indiqués dans le Tableau 2.

Tableau 2 : Résultats de mesure DSC

| Exemple | $T_{seuil}$ (°C) | $T_{pic}$ (°C) |
|---|---|---|
| 1 (comparatif) | 253 | 288 |
| 3 | 300 | 338 |
| 4 | 300 | 352 |
| 6 | 272 | 342 |
| 7 | 280 | 320 |
| 8 (comparatif) | 270 | 316 |
| 9 | 289 | 333 |
| 10 | 309 | 343 |
| 11 (comparatif) | 200 | 275 |
| Exemple 6 de FR-A-2 860 922 $Li_{1,13}Ni_{0,38}Mn_{0,35}Co_{0,12}Al_{0,02}O_2$ (comparatif) | inférieure à 259 | inférieure à 288 |
| Exemple 7 de FR-A-2 860 922 $Li_{1,13}Ni_{0,36}Mn_{0,33}Co_{0,13}Al_{0,05}O_2$ (comparatif) | | 295 |

Les composés des exemples comparatifs 1, 8 et 11 présentent une température de pic DSC de 288°C, 316°C et 275°C respectivement. Ces températures sont plus basses que les températures DSC des exemples selon l'invention 3, 4, 6, 7, 9 et 10 qui présentent une température de pic DSC comprise entre 320 et 352°C. Or, plus la température de pic DSC est élevée, meilleure est la stabilité thermique du composé. Les exemples selon l'invention présentent donc une stabilité thermique améliorée.

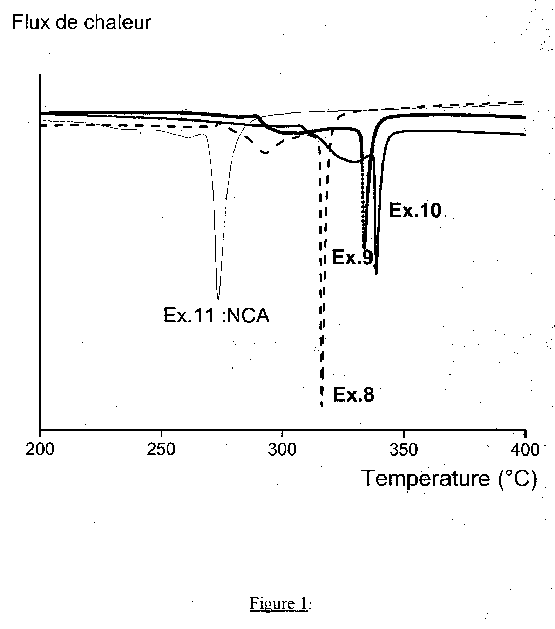

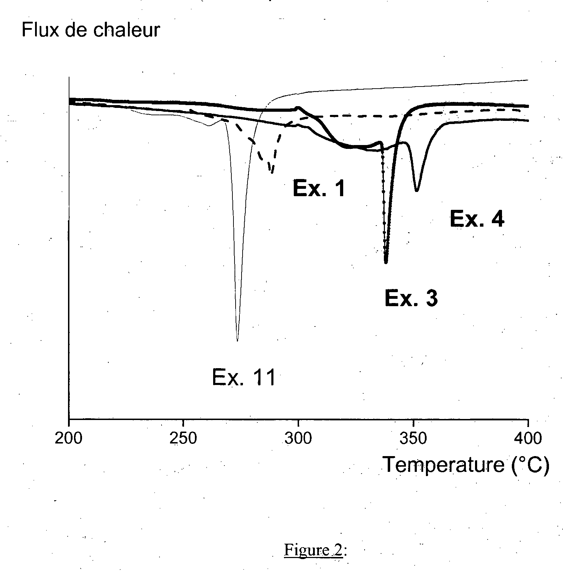

Les résultats des exemples 9 et 10 selon l'invention (Figure 1), comparés à ceux de l'exemple 8 ne contenant pas d'aluminium, montrent que la stabilité thermique est largement améliorée par la présence d'aluminium, les quantités de Mn et Ni étant constantes. De même, les résultats des exemples 3 et 4 selon l'invention (Figure 2), comparés à ceux de l'exemple 1 ne contenant pas d'aluminium, montrent que la stabilité thermique est largement améliorée par la présence d'aluminium, les quantités de Mn et Ni étant constantes. Ces résultats montrent clairement que la présence d'aluminium permet d'obtenir une température de réaction d'emballement thermique plus élevée.

A titre de comparaison, on a mesuré les températures de pic DSC des exemples 6 et 7 du document FR-A-2 860 922. Ces températures sont inférieures aux températures de pic DSC des exemples selon l'invention. L'amélioration de la stabilité thermique des exemples selon l'invention par rapport aux exemples 6 et 7 du document FR-A-2 860 922 s'explique par le fait que selon l'invention, la quantité atomique de manganèse représente de 95 à 100% de la quantité atomique de nickel.

De façon surprenante, l'augmentation de la stabilité thermique des composés selon l'invention ne se fait pas au détriment de leur capacité électrochimique. En effet, on s'attendrait à ce que l'augmentation de la quantité d'aluminium dans un composé entraîne une baisse de sa capacité électrochimique. En effet, une partie du nickel et/ou du cobalt est substituée par de l'aluminium. Une hausse de la quantité d'aluminium s'accompagne donc d'une baisse de la quantité de nickel et/ou de cobalt. Or, seuls le nickel et le cobalt contribuent à la capacité électrochimique du composé. Au contraire, la capacité électrochimique des composés selon l'invention est améliorée. Le Tableau 3 indique la capacité électrochimique des composés testés. Les valeurs de capacité sont obtenues pendant la formation électrochimique des accumulateurs à 50°C et à C/10.

Tableau 3 : Capacité électrochimique des composés testés.

| Exemple | Capacité totale (mAh/g) | $d_{ox}$M1* |
|---|---|---|
| Exemple 2 de FR-A-2 860 922 $Li_{1,07}Ni_{0,39}Mn_{0,39}Co_{0,14}Al_{0,01}O_2$ (comparatif) | 171 à 4,3 V 160 à 4,2 V vs. Lithium soit 160 à 4,1 V vs. Graphite | 3,15 |
| Exemple 3 de FR-A-2 860 922 $Li_{1,09}Ni_{0,39}Mn_{0,38}Co_{0,13}Al_{0,01}O_2$ (comparatif) | < 167 à 4,1V | |
| Exemple 7 $Li_{1,11}Ni_{0,36}Mn_{0,36}Co_{0,13}Al_{0,05}O_2$ | 171 à 4,1V vs. Graphite | 3,25 |
| *$d_{ox}$M1 désigne le degré d'oxydation global de $M_1$ où $M_1 = (Ni_aMn_bCo_cAl_y)_{1-x}$ | | |

La somme des quantités de nickel et de cobalt présentes dans l'exemple 2 de FR-A-2 860 922 est de 0,53 alors qu'elle n'est que de 0,49 pour l'exemple 7 selon l'invention. On s'attendrait donc à ce que le composé de l'exemple 2 de FR-A-2 860 922 présente une capacité électrochimique supérieure à celle de l'exemple 7 selon l'invention. Or, de façon surprenante, comme le montre le Tableau 3, la capacité électrochimique mesurée pour l'exemple 7 selon l'invention est de 171 mAh/g à 4,1 V par rapport à une électrode de graphite, (ce qui équivaut à 4,2V par rapport à une électrode de lithium), alors que la capacité électrochimique obtenue avec l'exemple 2 de FR-A-2 860 922 est de seulement 160 mAh/g à 4,1 V par rapport à une électrode de graphite. Le Tableau 3 montre donc que l'augmentation de la teneur en aluminium dans l'exemple 7 selon l'invention par rapport à la teneur en aluminium de l'exemple 2 de FR-A-2 860 922 n'a pas eu pour effet de réduire la capacité électrochimique. Au contraire, la capacité électrochimique a été augmentée de 6%. De même, le composé de l'exemple 3 de FR-A-2 860 922 présente une capacité électrochimique plus faible que le composé de l'exemple 7 selon l'invention.

Les Tableaux 4, 5 et 6 ci-dessous montrent le bénéfice de la surlithiation sur la structure des composés selon l'invention. Ces Tableaux récapitulent les données propriétés physico-chimiques (et électrochimiques si disponibles) des Exemples 5 (comparatif) et 2-3, 6 selon l'invention.

Le Tableau 4 présente différents traitements thermiques utilisés pour la fabrication du composé de l'Exemple 5. Quel que soit le traitement utilisé, le composé de l'exemple 5 présente une inhomogénéité de phase. Des impuretés de type spinelle et/ou un mélange de phases lamellaires est détecté par analyse par la technique de diffraction des Rayons X (DRX). Ce tableau montre que pour un rapport nominal Li/(NiCoMnAl) égal à 1,02, le composé est hétérogène avec l'obtention d'une distribution de phases alors que la phase lamellaire est obtenue pure quand ce rapport est égal à 1,08 (Exemples 2 et 3, Tableau 6) ou 1,13 (Exemple 6, Tableau 5). Ceci est probablement dû au fait que l'incorporation de l'aluminium dans la structure nécessite une température de calcination élevée, avec une perte de lithium associée. La technique de diffraction des rayons X permet donc de déterminer si le composé synthétisé est pur. L'absence d'épaulements des raies 003 et 104 indique l'obtention d'une seule phase lamellaire et non pas d'un mélange de phases lamellaires de compositions proches. L'absence de raie à l'angle de diffraction $2\theta=32°$ (Cu, Ka) indique l'absence de phase spinelle.

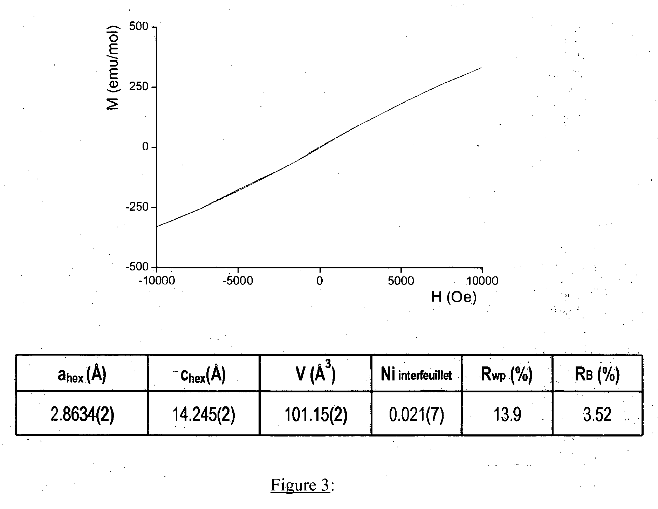

La surlithiation dans un domaine précis permet d'obtenir des taux de nickel inter feuillets réduits, comme le montrent les résultats de magnétisme (Figure 3) pour l'Exemple 7 (Li/(NiCoMnAl)=1,24). Dans ce cas, l'aimantation rémanente inexistante à champ nul (pas d'hystérésis) montre l'inexistence d'interactions ferromagnétiques, dû à la forte réduction de nickel dans l'espace inter feuillet pour ce matériau, ce qui est confirmé par l'analyse DRX.

Tableau 4: Récapitulatif de la synthèse et des propriétés physico-chimiques de l'Exemple 5 (Comparatif)

| Matériau | $Li_{1.01}(Ni_{0.425}Mn_{0.425}Co_{0.10}Al_{0.05})_{0.99}O_2$ | | | |
|---|---|---|---|---|
| Li/M | 1.02 | | | |
| Précalcination | 500°C/ 5h / air | 500°C/ 5h 1 air | 500°C/ 5h / air | 500°C/ 5h / air |
| Traitement thermique (direct) | 900°C 15min/air | 900°C 1h/air | 1000°C 15min / air | 1000°C 1 h / air |
| Données DRX | $FWHM_{(003)} = 0.20°$ $FWHM_{(104)} = 0.37°$ $I_{(003)}/I_{(104)} = 0.84$ | $FWHM_{(003)} = 0.17°$ $FWHM_{(104)} = 0.36°$ $I_{(003)}/I_{(104)} = 0.91$ | $FWHM_{(003)} = 0.12°$ $FWHM_{(104)} = 0.28°$ $I_{(003)}/I_{(104)} = 0.70$ | $FWHM_{(003)} = 0.12°$ $FWHM_{(104)} = 0.25°$ $I_{(003)}/I_{(104)} = 0.68$ |
| Paramètres structuraux | $a_{hex} = 2.8879(6)$ A $c_{hex} = 14.293(4)$ A $V = 103.24(4)$ Å$^3$ $R_{wp} = 15.2$ % | $a_{hex} = 2.8889(5)$ Å $c_{hex} = 14.298(4)$ Å $V = 103.34(4)$ Å$^3$ $R_{wp} = 15.7$ % | $a_{hex} = 2.8865(5)$ Å $c_{hex} = 14.297(3)$ A $V = 103.16(3)$ Å$^3$ $R_{wp} = 11.6$% | $a_{hex} = 2.8891(4)$ A $c_{hex} = 14.307(3)$ A $V = 103.41(3)$ Å$^3$ $R_{wp} = 13.8$ % |
| Impureté détectée au DRX | Type spinelle (pic caractéristique vers 30° (2θ)) | Type spinelle (pic caractéristique vers 30° (2θ)) | Mélanges de phases lamellaire | Mélanges de phases lamellaires |
| MEB | | | | |

EP 2 179 968 B1

Tableau 5: Récapitulatif de la synthèse et des propriétés physico-chimiques de l'Exemple 6.

| Matériau | $Li_{1.06}(Ni_{0.40}Mn_{0.40}Co_{0.10}Al_{0.10})_{0.94}O_2$ | | |
|---|---|---|---|
| Li/M | 1.13 | | |
| Précalcination | 500°C/ 5h /air | 500°C/ 5h 1 air | 500°C/ 5h / air |
| Traitement thermique (2°C/min) | 900°C/12 h/ air | 950°C/ 12 h/air | 1000°C/12 h/air |
| Données DRX | $FWHM_{(003)}$=0.16°<br>$FWHM_{(104)}$ = 0.23°<br>$I_{(003)}/I_{(104)}$=0.92 | $FWHM_{(003)}$=0.12°<br>$FWHM_{(104)}$=0.15°<br>$I_{(003)}/I_{(104)}$ = 0.91 | $FWHM_{(003)}$=0.12°<br>$FWHM_{(104)}$=0.13°<br>$I_{(003)}/I_{(104)}$=0.97 |
| Paramètres structuraux | $a_{hex}$ = 2.8724(3) Å<br>$c_{hex}$=14.264(2)Å<br>V=101.93(2)Å³<br>$R_{wp}$=11.9 % | $a_{hex}$=2.8746(2) A<br>$c_{hex}$=14.275(1) A<br>V=102.17(1)Å³<br>$R_{wp}$=11.8% | $a_{hex}$ = 2.8766(2) Å<br>$c_{hex}$=14.285(2)Å<br>V=102.37(2) Å³<br>$R_{wp}$=14.3% |
| Impureté détectée au DRX MEB | Non | Non | Non |

EP 2 179 968 B1

Tableau 6: Récapitulatif de la synthèse et des propriétés physico-chimiques des Exemples 2 et 3.

| Matériau | $Li_{1.038}(Ni_{0.40}Mn_{0.40}Co_{0.18}Al_{0.02})_{0.962}O_2$ | | $Li_{1.038}(Ni_{0.40}Mn_{0.40}Co_{0.15}Al_{0.05})_{0.962}O_2$ | |
|---|---|---|---|---|
| Li/M | 1.08 | | 1.08 | |
| Précalcination | 500°C/ 5h/ air | 500°C/ 5h / air | 500°C/ 5h / air | 500°C/5h/air |
| Traitement thermique | 950°C 12h / air (2°C/min) | 950°C 2 h /air (direct) | 950°C 12h / air (2°C/min) | 950°C 2h / air (direct) |
| Données DRX | $FWHM_{(003)}=0.13°$ $FWHM_{(104)}=0.14°$ $I_{(003)}/I_{(104)}=1.07$ | $FWHM_{(003)} = 0.16°$ $FWHM_{(104)} = 0.19°$ $I_{(003)}/I_{(104)} = 0.98$ | $FWHM_{(003)} = 0.10°$ $FWHM_{(104)} = 0.16°$ $I_{(003)}/I_{(104)} =1.13$ | $FWHM_{(003)}=0.18°$ $FWHM_{(104)} = 0.20°$ $I_{(003)}/I_{(104)} = 0.93$ |
| Paramètres structuraux | $a_{hex} = 2.8782(3)$ Å $c_{hex} =14.280(2)$ Å $V=102.44(2)$ Å³ $R_{wp} =13.1\%$ | $a_{hex}=2.8782(3)$ Å $c_{hex} =14.277(2)$ Å $V =102.42(2)$ Å³ $R_{wp} = 13.0 \%$ | $a_{hex} = 2.8695(2)$ Å $c_{hex} =14.265(1)$ Å $V=101.72(2)$ Å³ $R_{wp} =12.2\%$ | $a_{hex} =2.8693(2)$ Å $c_{hex} = 14.257(2)$ Å $V=101.65(2)$Å³ $R_{wp} =12.0 \%$ |
| Impureté détectée au DRX | Non | Non | Non | Non |
| MEB | | | | |

L'effet néfaste d'un faible taux de surlithiation, c'est-à-dire inférieur à 1,05, peut être observé sur les mesures de puissance effectuées sur de petits éléments cylindriques, de format 4/5A, comprenant :

- une électrode positive constituée de la matière active positive (Exemple 7 selon l'invention et exemple 11 comparatif), des conducteurs électroniques (carbone, suie..) et du liant (PVDF, PTFE...) ;
- Un électrolyte constitué d'un sel de lithium et d'un mélange de carbonates d'alkyles ;
- Un séparateur (par exemple en polyéthylène ou polypropylène) ;
- Une électrode négative constituée de graphite et de liants.

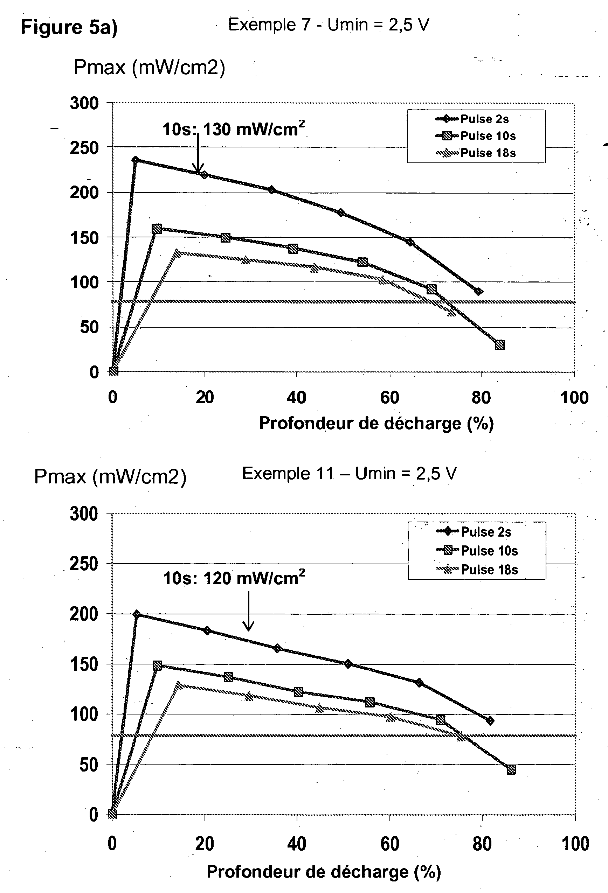

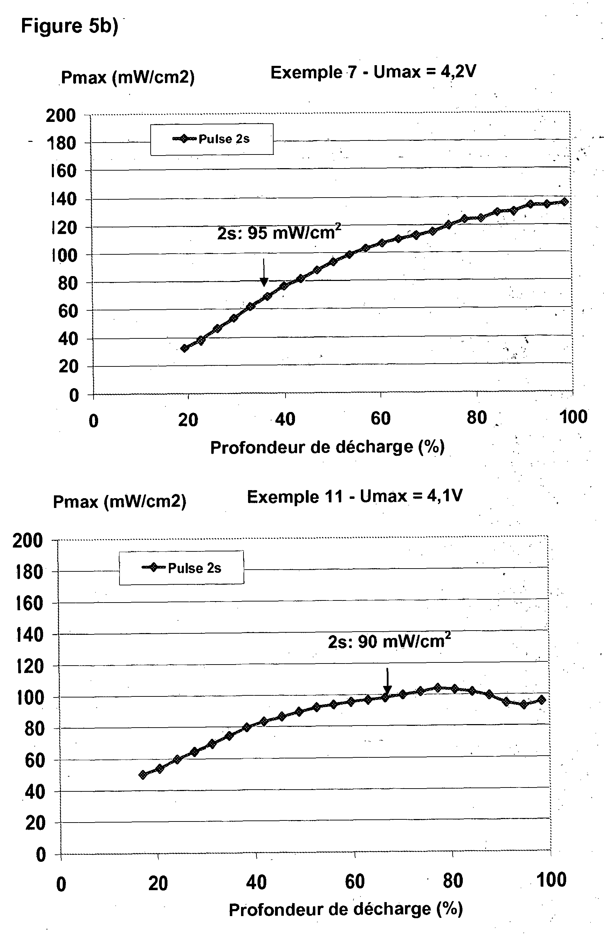

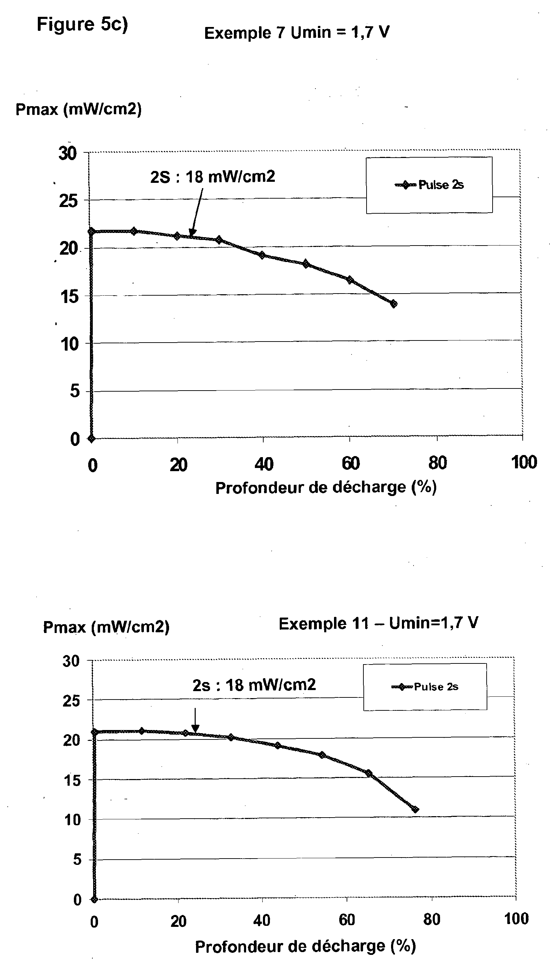

Les tests de puissance (Peak Power Tests, PPT) ont été réalisés à 30°C et à -20°C en charge et en décharge (Figure 5). L'Exemple 7 présente des performances meilleures ou au moins aussi bonnes que l'Exemple 11, qui est un matériau NCA de l'art antérieur.

En résumé, les matériaux d'électrode positive, répondant aux critères de composition décrits précédemment, présentent de bonnes caractéristiques en terme de stabilité thermique, tout en conservant, voire améliorant, les performances en puissance par rapport au NCA. Ceci permet éventuellement son utilisation dans des applications de puissance, par exemple pour les véhicules hybrides électriques. Les composés selon l'invention présentent également un bon compromis en termes de capacité et de puissance.

Enfin, les composés selon l'invention peuvent être fabriqués à un faible coût. Le Tableau 5 montre le calcul des coûts moyens des métaux (Ni, Co, Mn, Al) pour chacune des compositions listées dans le Tableau 1 (se basant sur les cours du London Metal Exchange Mai 2008). En réduisant le taux de Ni (par rapport au NCA) et de Co (par rapport au NMC=1 :1 :1), les coûts moyens des métaux sont considérablement réduits pour ces compositions, ceci en-dehors de tout coût lié au procédé de synthèse utilisé.

Tableau 7: Comparaisons des coûts moyens des métaux (USD/lb) (Co = 29, Ni = 12, Mn = 1.4, Al = 1.3 USD/lb)

| N° exemple | Ni | Mn | Co | Al | Coûts |
|---|---|---|---|---|---|
| 1 | 0,40 | 0,40 | 0,20 | 0,00 | 11,2 |
| 2 | 0,40 | 0,40 | 0,18 | 0,02 | 10,6 |
| 3 | 0,40 | 0,40 | 0,15 | 0,05 | 9,8 |
| 4 | 0,40 | 0,40 | 0,10 | 0,10 | 8,4 |
| 5 | 0,40 | 0,40 | 0,10 | 0,10 | 8,4 |
| 6 | 0,40 | 0,40 | 0,10 | 0,10 | 8,4 |
| 7 | 0,40 | 0,40 | 0,15 | 0,05 | 9,8 |
| 8 | 0,425 | 0,425 | 0,15 | 0,00 | 10,0 |
| 9 | 0,425 | 0,425 | 0,10 | 0,05 | 8,7 |
| 10 | 0,425 | 0,425 | 0,05 | 0,10 | 72 |
| 11 | 0,80 | 0,00 | 0,15 | 0,05 | 14,0 |

## Revendications

1. Composé de formule $Li_{1+x}(Ni_a Mn_b Co_c Al_y)_{1-x}O_2$ dans lequel :

   a, b et c sont non nuls ;

   $$a+b+c+y=1 \; ;$$

   $$1,05 \leq (1+x)/(1-x) \leq 1,25 \; ;$$

   $$0,015 \leq y(1-x) \; ;$$

   la quantité atomique de manganèse représentant de 95% à 100% de la quantité atomique de nickel.

2. Composé selon la revendication 1, dans lequel la quantité de manganèse représente de 97% à 100% de la quantité de nickel, de préférence de 98% à 100% de la quantité de nickel, de préférence encore de 99% à 100% de la quantité de nickel.

3. Composé selon l'une des revendications précédentes, dans lequel

   $$0,02 \leq y(1-x).$$

4. Composé selon l'une des revendications précédentes, dans lequel

   $$0,04 \leq y(1-x).$$

5. Composé selon l'une des revendications précédentes, dans lequel

   $$0,09 \leq y(1-x).$$

6. Composé selon l'une des revendications précédentes, dans lequel

$$1,05 \leq (1+x)/(1-x) \leq 1,15$$

7. Composé selon l'une des revendications précédentes, dans lequel

$$1,05 \leq (1+x)/(1-x) \leq 1,10$$

8. Composé selon l'une des revendications précédentes, dans lequel :

$$a=b=0,5-z \ ;$$

$$c=2z-y \ ;$$

et

$$0 < z \leq 0,15$$

9. Composé selon la revendication 8, dans lequel $0 < z \leq 0,10$.

10. Composé selon la revendication 9, dans lequel $0 < z \leq 0,075$.

11. Composé selon l'une des revendications précédentes, ne comportant pas d'ions $Mn^{3+}$.

12. Electrode comprenant le composé selon l'une des revendications 1 à 11.

13. Générateur électrochimique lithium-ion ou lithium-polymère comprenant une électrode selon la revendication 12.


**Patentansprüche**

1. Verbindung mit der Formel $Li_{1+x}(Ni_aMn_bCo_cAl_y)_{1-x}O_2$, bei der:

   - a, b und c ungleich Null sind;
   - a+b+c+y= 1;
   - $1,05 \leq (1+x)/(1-x) \leq 1,25$;
   - $0,05 \leq y(1-x)$;

   wobei die Atommenge Mangan 95% bis 100% der Atommenge Nickel beträgt.

2. Verbindung nach Anspruch 1, bei der die Manganmenge 97% bis 100% der Nickelmenge beträgt, vorzugsweise 98% bis 100% der Nickelmenge, noch bevorzugter 99% bis 100% der Nickelmenge.

3. Verbindung nach einem der vorhergehenden Ansprüche, bei der

$$0,02 \leq y(1-x)$$

4. Verbindung nach einem der vorhergehenden Ansprüche, bei der

$$0,04 \leq y(1-x)$$

5. Verbindung nach einem der vorhergehenden Ansprüche, bei der

$$0{,}09 \leq y(1\text{-}x).$$

**6.** Verbindung nach einem der vorhergehenden Ansprüche, bei der

$$1{,}05 \leq y(1+x)/(1\text{-}x) \leq 1{,}15.$$

**7.** Verbindung nach einem der vorhergehenden Ansprüche, bei der

$$1{,}05 \leq y(1+x)/(1\text{-}x) \leq 1{,}10.$$

**8.** Verbindung nach einem der vorhergehenden Ansprüche, bei der:

$$a=b=0{,}5\text{-}z; \quad c=2z\text{-}y; \quad \text{und} \quad 0<z\leq0{,}15.$$

**9.** Verbindung nach Anspruch 8, bei der $0 < z \leq 0{,}10$.

**10.** Verbindung nach Anspruch 9, bei der $0 < z \leq 0{,}075$.

**11.** Verbindung nach einem der vorhergehenden Ansprüche, die keine $Mn^{3+}$-Ionen umfasst.

**12.** Elektrode, umfassend die Verbindung nach einem der Ansprüche 1 bis 11.

**13.** Elektrochemischer Lithium-Ion-Generator oder elektrochemischer Lithium-Polymer-Generator, umfassend eine Elektrode nach Anspruch 12.

**Claims**

**1.** A compound of formula $Li_{1+x}(Ni_aMn_bCo_cAl_y)_{1-x}O_2$ wherein:

a, b and c are non-zero;

$$a+b+c+y=1;$$

$$1.05 \leq (1+x)/(1\text{-}x) \leq 1.25;$$

$$0.015 \leq y(1\text{-}x);$$

the atomic amount of manganese representing from 95% to 100% of the atomic amount of nickel.

**2.** The compound according to claim 1, wherein the amount of manganese represents from 97% to 100% of the amount of nickel, preferably from 98% to 100% of the amount of nickel, still preferably from 99% to 100% of the nickel amount.

**3.** The compound according to any one of the preceding claims, wherein $0.02 \leq y(1\text{-}x)$.

**4.** The compound according to any one of the preceding claims, wherein $0.04 \leq y(1\text{-}x)$.

**5.** The compound according to any one of the preceding claims, wherein $0.09 \leq y(1\text{-}x)$.

**6.** The compound according to any one of the preceding claims, wherein $1.05 \leq (1+x)/(1\text{-}x) \leq 1.15$.

7. The compound according to any one of the preceding claims, wherein $1.05 \leq (1+x)/(1-x) \leq 1.10$.

8. The compound according to any one of the preceding claims, wherein:

$$a=b=0.5-z:$$

$$c=2z-y;$$

and

$$0 < z \leq 0.15.$$

9. The compound according to claim 8, wherein $0<z\leq0.10$.

10. The compound according to claim 9, wherein $0<z\leq0.0075$.

11. The compound according to any one of the preceding claims, devoid of $Mn^{3+}$ ions.

12. An electrode comprising the compound according to any one of claims 1 to 11.

13. A lithium-ion or lithium-polymer electrochemical generator comprising an electrode according to claim 12.

Figure 1:

Figure 2:

| $a_{hex}$ (Å) | $c_{hex}$ (Å) | V (Å$^3$) | Ni interfeuillet | $R_{wp}$ (%) | $R_B$ (%) |
|---|---|---|---|---|---|
| 2.8634(2) | 14.245(2) | 101.15(2) | 0.021(7) | 13.9 | 3.52 |

Figure 3:

Figure 4:

**Figure 5a)**       Exemple 7 - Umin = 2,5 V

Pmax (mW/cm2)

10s: 130 mW/cm²

Pulse 2s
Pulse 10s
Pulse 18s

Profondeur de décharge (%)

Pmax (mW/cm2)       Exemple 11 – Umin = 2,5 V

10s: 120 mW/cm²

Pulse 2s
Pulse 10s
Pulse 18s

Profondeur de décharge (%)

## Figure 5b)

Exemple 7 - Umax = 4,2V

Pmax (mW/cm2)

2s: 95 mW/cm$^2$

Pulse 2s

Profondeur de décharge (%)

Exemple 11 - Umax = 4,1V

Pmax (mW/cm2)

2s: 90 mW/cm$^2$

Pulse 2s

Profondeur de décharge (%)

**Figure 5c)**   **Exemple 7 Umin = 1,7 V**

Pmax (mW/cm2)

2S : 18 mW/cm2

Profondeur de décharge (%)

Pmax (mW/cm2)   **Exemple 11 – Umin=1,7 V**

2s : 18 mW/cm2

Profondeur de décharge (%)

**EP 2 179 968 B1**

## RÉFÉRENCES CITÉES DANS LA DESCRIPTION

**Documents brevets cités dans la description**

- FR 2860922 A
- US 20050014065 A
- JP 2005150102 A